# EUROPÄISCHE PATENTSCHRIFT

(11) **EP 0 485 697 B1**
(45) Veröffentlichungstag und Bekanntmachung des Hinweises auf die Patenterteilung: **29.11.1995**
(21) Anmeldenummer: 91114067.1
(22) Anmeldetag: 22.08.1991
(51) Int. Cl.: F16C 27/06, B60G 7/02

(54) **Elastisches Gleitlager**
Elastic bearing
Palier élastique

(30) Priorität: 13.11.1990 DE 4036051
(43) Veröffentlichungstag der Anmeldung: 20.05.1992
(73) Patentinhaber: LEMFOERDER METALLWAREN AG., D-49441 Lemförde (DE)
(72) Erfinder: Jördens, Ernst Günther, Dipl.-Ing., W-2845 Damme (DE); Kammel, Helmut, Dipl.-Ing., W-2845 Damme (DE)
(74) Vertreter: Bruse, Willy Hans Heinrich

(56) Entgegenhaltungen:
- DE-A- 3 707 600
- DE-A- 3 800 314
- DE-U- 8 811 326
- FR-A- 2 202 556
- FR-A- 2 442 371

## Beschreibung

Die Erfindung betrifft ein elastisches Gleitlager für Fahrwerksteile in Kraftfahrzeugen nach dem Oberbegriff des Patentanspruches 1.

Ein Gleitlager mit diesen Gattungsmerkmalen ist aus der DE-A-3 800 314 bekannt. Auf dem Außenmantel der Innenbuchse dieses bekannten Gleitlagers ist eine Kunststoffschicht vorgesehen, welche gute Gleiteigenschaften und an der Kontaktfläche mit der Außenbuchse Schmiermitteltaschen aufweist. Beide Buchsen weisen außerdem an radial verlaufenden Flanschvorsprüngen Axiallagerflächen auf, wobei eine Dichtung die Axiallagerflächen umgreift.

Aus der GB-A-1 205 749 ist ein Gleitlager bekannt, welches eine Außenbuchse aus Gummimetall aufweist, deren innere Metallhülse im unmittelbaren Kontakt mit der Kunststoffgleitfläche der Innenbuchse steht, und deren außenliegender Gummikörper (Elastomer) in ein Lagerauge eines Fahrzeugteiles einsetzbar ist. Der sich einseitig am axialen Ende der Innenbuchse erstreckende Flanschvorsprung ist mit der Kunststoffgleitschicht der Innenbuchse einstückig geformt. Der radiale Flanschvorsprung der Außenbuchse ist an ihrem axialen Ende ausgebildet. Zur Verminderung des an sich hohen Verschleißes solcher Gleitlager umgreift bei der bekannten Ausführung die einstückig mit dem Gummikörper ausgebildete Dichtlippe das Profil der beiden aneinanderliegenden Flanschvorsprünge der Innenbuchse und der Außenbuchse außenseitig und berührt auf der axial äußeren Seite den Flanschvorsprung an der Innenbuchse.

Aus der US-A-3,298,762 ist es bekannt, bei einem elastischen Gleitlager einen ringscheibenförmigen Axiallagerflansch als separates Bauteil an der Lagerinnenbuchse zu befestigen.

In der DE-C-3 624 280 und auch in der GB-A-1 193 634 ist es bereits offenbart, axial belastbare Lagerteile mittels einer Schnappverbindung zu befestigen.

Aufgabe der Erfindung ist es, ein axial belastbares Gleitlager nach dem Gattungsbegriff unter Beibehaltung von dessen vorteilhaften Laufeigenschaften und Dichtungseigenschaften kostengünstiger auszubilden.

Erfindungsgemäß wird diese Aufgabe durch eine Ausbildung nach dem Patentanspruch 1 gelöst.

Bei dieser Ausbildung werden Axialkräfte durch die Kunststoffscheibe von der Innenbuchse auf die Außenbuchse oder umgekehrt übertragen. Diese Kunststoffscheibe besteht vorteilhaft aus PTFE (Polytetraflouräthylen), ist beidseitig angeordnet und wird mit einer Schnappverbindung auf die axialen Enden der auf der Innenbuchse angeordneten Beschichtung fest aufgesetzt und durch die Schnappverbindung gehalten. Das ermöglicht eine einfache Herstellung der im wesentlichen die Form eines zylindrischen Rohrkörpers aufweisenden Kunststoffschicht auf der Innenbuchse und der auf die Enden dieser Kunststoffschicht aufsetzbaren Kunststoffscheiben, durch die der sich radial erstreckende Flanschvorsprung an den beiden Enden der Innenbuchse gebildet wird. Die sich radial erstreckenden Flanschvorsprünge an der Außenbuchse werden beidseitig vorteilhaft durch Kragenränder gebildet, die sich im Wege spanloser Verformung an den Enden einer rohrförmigen Außenbuchse ausbilden lassen. Von besonderem Vorteil ist es, daß der Elastomerkörper an seinen axialen Enden Aussparungen aufweisen kann, wodurch eine stärkere axiale Elastizität des Lagers erreicht wird.

Für die Verbindung der Kunststoffscheibe mit dem axialen Ende der Kunststoffschicht auf der Innenbuchse ist vorgesehen, daß die Kunststoffschicht am axialen Ende einen Randwulst und die Kunststoffscheibe einen Innenwulst mit einem gegenüber dem Randwulst verringerten Durchmesser aufweisen, so daß der Innenwulst unter elastischer radialer Aufweitung über den äußeren Randwulst am Ende der Kunststoffschicht auf der Innenbuchse aufgesetzt werden kann und einen sicheren Halt findet.

Auf der Zeichnung ist ein Ausführungsbeispiel der Erfindung dargestellt. Es zeigen:

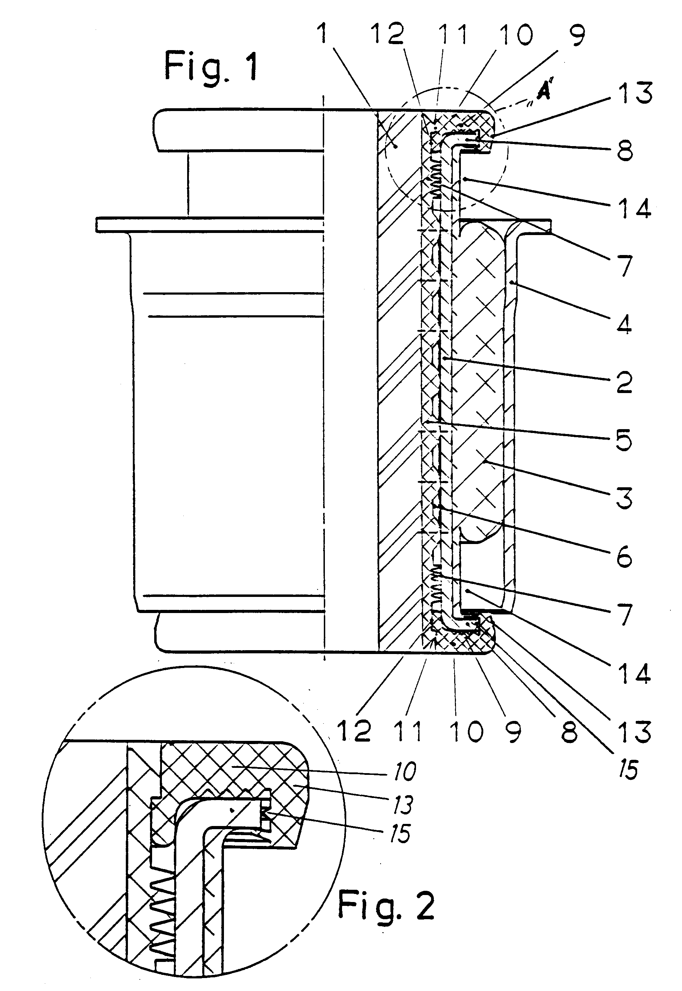

- Figur 1: ein Lager der neuen Bauart teilweise im Schnitt und teilweise in Ansicht und
- Figur 2: eine maßstäbliche Vergrößerung des Ausschnittes "A" in Figur 1.

Das elastische Gleitlager besteht aus einer starren Innenbuchse 1, einer im wesentlichen ebenfalls starren Außenbuchse 2, einem diese umgebenden Elastomerkörper 3 und einer äußeren Aufnahmebuchse 4, mit dem das Lager beispielsweise in ein Lagerauge eines auf der Zeichnung nicht dargestellten Radlenkers einsetzbar ist, um diesen mittels eines die Innenbuchse 1 durchgreifenden Bolzens an den ebenfalls nicht dargestellten Längsholmen eines Kraftfahrzeuges zu befestigen.

Zwischen der Innenbuchse 1 und der Außenbuchse 2 befindet sich eine auf der Innenbuchse 1 festhaftend angeordnete Kunststoffschicht 5, an deren äußerer Kontaktfläche Schmiermitteltaschen 6 zur Aufnahme von Fett oder dergleichen für eine Dauerschmierung angeordnet sind. In Nähe der axialen Enden dieser Kunststoffschicht 5 sind Dichtlippen 7 vorgesehen, um das Eindringen von Schmutz zwischen die aufeinandergleitenden Innenflächen der Außenbuchse 2 und der Außenfläche der Kunststoffschicht 5 zu verhindern. An den axialen Enden der Außenbuchse 2 sind durch Verformung des Werkstoffes der Außenbuchse 2 sich radial erstreckende Flanschvorsprünge 8 angeordnet, die mit sich ebenfalls radial erstreckenden Flanschvorsprüngen 9 am Ende der Innenbuchse 1 zusammenwirken. Die letzteren radialen Flanschvorsprünge 9 werden durch eine Kunststoffscheibe 10 gebildet, die mit einer Schnappverbindung auf die axial äußeren Enden der Kunststoffschicht 5 axial unverschiebbar aufgesetzt sind. Dies wird durch einen Kantenwulst 11 an den axialen Enden der Kunststoffschicht 5 und einen Innenwulst 12 der ringförmig ausgebildeten Scheibe 10 mit einem gegenüber dem Kantenwulst 11 geringeren Durchmesser erreicht, so daß die Scheibe 10 unter elastischer radialer Aufweitung über den Kantenwulst 11 hinweggeschoben werden kann und diesen dann mit elastischer Vorspannung hintergreift. Eine solche Ausbildung aus einem Kantenwulst 11 und einem Innenwulst 12 kann eventuell axial mehrfach hintereinander vorgesehen sein, um das Eindringen von Schmutz sicher zu vermeiden. Eine entsprechende Bemessung sorgt dafür, daß die dem radialen Flanschvorsprung 8 an der Außenbuchse 2 zugewendete Fläche der den radialen Flanschvorsprung 9 an der Innenbuchse 1 bildenden Scheibe 10 mit geringer axialer Spannung gegen den Flanschvorsprung 8 gedrückt wird. Zur Abdichtung des zwischen beiden liegenden Spalts ist an der Scheibe 10 ein Kragenrand 13 ausgebildet, der sich nach innen zur Lagermitte erstreckt und den radialen Flanschvorsprung 8 an der Außenbuchse 2 überdeckt.

Aus der Zeichnung ist deutlich erkennbar, daß die äußere Aufnahmebuchse 4 kürzer als die axiale Länge der Innenbuchse 1 bemessen ist. Dadurch entsteht zwischen der äußeren Aufnahmebuchse 4 und der Radialflanschausbildung an den axialen Enden der Außenbuchse 2 und der Innenbuchse 1 ein Freiraum. Im Bereich dieses Freiraumes kann der Elastomerkörper 3 insgesamt oder nur in begrenzten Bereichen 14 freigeschnitten sein, um eine größere axiale Elastizität des Lagers zu erreichen.

Dichtungslippen oder andere Dichtungsmittel 15 vergleichbarer Art innerhalb des Kragenrandes 13 verhindern das Eindringen von Schmutz in das Lager, gegebenenfalls in Verbindung mit oder anstelle einer an dem Kragenrand 13 angeordneten oder an diesem ausgebildeten Lippendichtung, die den Flanschvorsprung 8 der Außenbuchse umgreift und an dessen innerer Flanke anliegt.

### BEZUGSZEICHENLISTE:

- 1: Innenbuchse
- 2: Außenbuchse
- 3: Elastomerkörper
- 4: Aufnahmebuchse
- 5: Kunststoffschicht
- 6: Schmiermitteltasche
- 7: Dichtlippe
- 8: Flanschvorsprung
- 9: Flanschvorsprung
- 10: Kunststoffscheibe
- 11: Randwulst
- 12: Innenwulst
- 13: Kragenrand
- 14: Freischnittbereich
- 15: Dichtungsmittel

## Patentansprüche

1. Elastisches Gleitlager für Fahrwerksteile in Kraftfahrzeugen, bestehend aus einer starren, am Außenmantel mit einer Schmiermitteltaschen (6) aufweisenden Kunststoffgleitschicht versehenen Innenbuchse (1) und einer auf der Gleitschicht drehbar gelagerten, außen von einem Elastomerkörper (3) umgebenen Außenbuchse (2), wobei zumindest an einem axial äußeren Lagerende zur Bildung einer zwischen der Innenbuchse (1) und der Außenbuchse (2) wirkenden Axiallagerung sowohl die Innenbuchse (1) als auch die Außenbuchse (2) je einen radial nach außen gerichteten Flanschvorsprung aufweisen und einer die Axiallagerung außen an den Flanschvorsprüngen (8,9) umgreifende Dichtung vorgesehen ist, dadurch gekennzeichnet, daß an beiden Lagerenden Axiallagerungen ausgebildet sind, bei denen die Flanschvorsprünge (9) der Innenbuchse (1) Ringscheiben (10) aus Kunststoff sind, die unter elastischer Aufweitung ihres inneren Umfangs mittels einer Schnappverbindung (11,12) axial unverschieblich auf die bis zum axialen Ende der Innenbuchse (1) durchgehend verlaufende Kunststoffgleitschicht (5) aufgesetzt sind, und daß jede Ringscheibe (10) zur Dichtung der Axiallagerung einen zur axialen Lagermitte hin gerichteten, den benachbarten Flanschvorsprung (8) der Außenbuchse (2) übergreifenden Kragen (13) aufweist.

2. Gleitlager nach Anspruch 1, dadurch gekennzeichnet, daß die Kunststoffgleitschicht (5) einen äußeren Randwulst (11) und die Ringscheibe (10) einen Innenwulst (12) mit einem gegenüber dem Randwulst (11) verringerten Durchmesser aufweist.

## Claims

1. Elastic slide bearing for running gear parts in motor vehicles, consisting of a rigid inner bush (1), having on its outer surface a plastics sliding layer which has lubricant pockets (6), and of an outer bush (2), mounted on the sliding layer so as to be capable of rotation and encompassed on the outside by an elastomer body (3), wherein, at least at one axially outer end of the bearing, for the purpose of forming an axial seating acting between the inner bush (1) and the outer bush (2), both the inner bush (1) and the outer bush (2) each having a flange projection, aligned radially outwards, and there is provided a seal which encompasses the axial seating on the outside at the flange projections (8, 9), characterised in that axial seatings are fashioned at both ends of the bearing, in which the flange projections (9) of the inner bush (1) are annular discs (10) composed of plastics which, through elastic expansion of their inner circumference, are fitted on to the plastics sliding layer (5) extending to the axial end of the inner bush (1) by means of a snap connection (11, 12) so that they are incapable of axial displacement, and in that each annular disc (10) for sealing the axial seating includes a collar (13) which is aligned towards the axial centre of the bearing and covers the adjacent flange projection (8) of the outer bush (2).

2. Slide bearing according to Claim 1, characterised in that the plastics sliding layer (5) includes an outer edge bead (11) and the annular disc (10) includes an inner bead (12) having a diameter which is less than that of the edge bead (11).

## Revendications

1. Palier élastique pour des pièces de châssis de véhicules, se composant d'une douille intérieure (1) rigide munie sur son enveloppe extérieure d'un revêtement glissant en matière synthétique comportant des poches de lubrifiants (6), et d'une douille extérieure (2), montée tournante sur le revêtement glissant et entourée à l'extérieur d'un corps en élastomère (3), aussi bien la douille intérieure (1) que la douille extérieure (2) étant munies chacune, au moins à une extrémité de palier axialement extéreure, d'une collerette en saillie dirigée radialement vers l'extérieur, pour la formation d'une butée axiale agissant entre la douille intérieure (1) et la douille extérieure (2), et un joint entourant la butée axiale extérieurement contre les collerettes en saillies (8, 9), caractérisé en ce que, aux deux extrémités de palier, sont formées des butées axiales dont les collerettes en saillie (9) de la douille intérieure (1) sont des disques (10) en matière synthétique qui, avec extension élastique de son périmètre intérieur, au moyen d'un assemblage à enclenchement (11, 12) sont montées immobiles axialement sur le revêtement en matière synthétique (5), qui est continu jusqu'à l'extrémité axiale de la douille intérieure (1), et en ce que chaque disque (10) est muni, pour l'étanchéité de la butée axiale, d'un bord rabattu (13) dirigé vers l'axe du palier, et enveloppant la collerette (8) voisine de la douille extérieure (2).

2. Palier selon la revendication 1, caractérisé en ce que le revêtement en matière synthétique (5) est muni d'un bourrelet de bordure extérieur (11), et que le disque (10) est muni d'un bourrelet intérieur (12) ayant un diamètre réduit par rapport au bourrelet de bordure.
